# EUROPÄISCHE PATENTSCHRIFT

(11) **EP 2 463 566 B1**
(45) Veröffentlichungstag und Bekanntmachung des Hinweises auf die Patenterteilung: **11.12.2013**
(21) Anmeldenummer: 11184499.9
(22) Anmeldetag: 10.10.2011
(51) Int. Cl.: F16L 25/01, H01R 13/00, F16L 53/00

(54) **Verbindungsanordnung für beheizbare Fluidleitungen**
Connection assembly for heatable fluid conduits
Agencement de raccordement pour conduites de fluide pouvant être chauffées

(30) Priorität: 08.12.2010 DE 102010053736
(43) Veröffentlichungstag der Anmeldung: 13.06.2012
(73) Patentinhaber: Voss Automotive GmbH, 51688 Wipperfürth (DE)
(72) Erfinder: Berg, Manfred, 51688 Wipperfürth (DE); Brandt, Josef, 51688 Wipperfürth (DE); Etscheid, Tobias, 51789 Lindlar (DE); Heienbrok, Mark, 51766 Engelskirchen (DE); Isenburg, Marco, 40885 Ratingen (DE); Jeschonnek, Markus, 51688 Wipperfürth (DE); Schöneberg, Christoph, 51688 Wipperfürth (DE); Schwarzkopf, Otfried, 51515 Kürten (DE); Mitterer, Reiner, 51688 Wipperfürth (DE)
(74) Vertreter: Patentanwälte Dr. Solf & Zapf

(56) Entgegenhaltungen:
- EP-A1- 1 793 152
- EP-A2- 0 142 944
- DE-A1-102005 021 915
- DE-U1-202007 018 089
- FR-A1- 2 924 786

## Beschreibung

Die vorliegende Erfindung betrifft gemäß dem Oberbegriff des Anspruchs 1 eine Verbindungsanordnung zum schnellen und lösbaren Durchgangsverbinden von zwei elektrisch beheizbaren Fluidleitungen, bestehend aus zwei Kupplungsteilen, die jeweils eines von zwei korrespondierenden, miteinander kuppelbaren und mit jeweils einer der zwei zu verbindenden Fluidleitungen verbundenen oder zu verbindenden Fluidkupplungsteilen sowie jeweils mindestens ein Elektro-Steckverbinderteil derart aufweisen, dass durch Zusammenfügen bzw. Trennen der beiden Kupplungsteile die Fluidkupplungsteile einerseits und die Elektro-Steckverbinderteile andererseits gemeinsam, d. h. gleichzeitig, verbindbar bzw. trennbar sind.

Das Dokument EP 1 793 152 A1 beschreibt eine solche "Fluidkupplungsanordnung mit elektrischer Steckverbinderanordnung" in einem Fluidverteilungssystem beispielsweise in einem Kraftfahrzeug. Bei dem Fluid kann es sich z. B. um eine wässrige Harnstofflösung handeln, wie sie zur Reduzierung von Stickoxiden in Abgas-SCR-Katalysatoren verwendet wird (SCR = Selective Catalytic Reduction = selektive katalytische Reduktion). Bei niedrigen Umgebungstemperaturen kann die Flüssigkeit einfrieren. Deshalb werden Fluid führende Elemente, wie Pumpen oder Schläuche, beheizt, um das Einfrieren zu verhindern oder ein bereits eingefrorenes Fluid wieder aufzutauen. Dazu werden innerhalb des Fluidsystems beheizbare Komponenten über Fluidleitungen verbunden, wobei auch die Fluidleitungen elektrisch beheizt sein können. Die bekannte Fluidkupplungsanordnung weist zwei Kupplungsteile auf, die zusammenwirken, um zwei Fluidleitungen zu verbinden. Weiterhin weist die Fluidkupplungsanordnung eine elektrische Steckverbinderanordnung auf, mit Hilfe derer elektrische Leitungen miteinander verbunden werden, die an den Fluidleitungen entlang geführt sind. Offensichtlich handelt es sich bei diesen elektrischen Leitungen um Versorgungsleitungen zur elektrischen Spannungsversorgung von nicht genauer beschriebenen elektrischen Heizmitteln aus einer elektrischen Energiequelle, z. B. einer Batterie. Die bekannte Anordnung führt daher zu einem entsprechenden Aufwand für die Herstellung der elektrischen Anschlussverbindungen der Versorgungsleiter. In konstruktiver Hinsicht ist die elektrische Steckverbinderanordnung seitlich versetzt an der Fluidkupplungsanordnung angeordnet, indem an jedem Fluidkupplungsteil seitlich ein Gehäuse eines Steckverbinders bzw. eines Gegensteckverbinders angeformt ist.

Das Dokument FR 2 924 786 A1 bzw. die korrespondierende deutsche Veröffentlichung DE 11 2008 003 310 T5 beschreibt eine Heizrohrleitung für den Transport von Fluid, wobei die Rohrleitung aus einem Rohr und zumindest einem Anschlussstück am Ende des Rohrs besteht. Die Rohrleitung weist Mittel zur elektrischen Widerstandsbeheizung auf, die sich über die Länge des Rohrs erstrecken. In einer Ausiührungsform ist auch im Bereich des Anschlussstückes eine Beheizung in Form von Heizwindungen eines elektrischen Widerstandsdrahtes vorgesehen. Zudem ist ein elektrischer Verbinder mit der restlichen Rohrleitung durch eine Aufformung verbunden, die den Endbereich des Rohrs, der mit dem Anschlussstück versehen ist, bereichsweise, das heißt in einem von der Verbindungsseite entfernten Bereich umschließt.

Das Dokument DE 10 2005 021 915 A1 beschreibt ein weiteres Anschlussstück für eine Fluidleitung, weiches seitlich befestigte Kontaktelemente aufweist. Ein zusätzliches Gehäuse ist hier nicht vorgesehen,

Ähnliches gilt auch für das Dokument EP 0 142 944 A2, wobei allerdings elektrische Kontaktelemente in das Material des Fluidverbinders seitlich neben einer Strömungspassage integriert sind.

Das Dokument DE 20 2007 018 089 U1 beschreibt eine elektrisch beheizbare Medienleitung, bestehend aus einer Fluidleitung und mindestens einem mit einem Leitungsende verbundenen Fluidverbinder. Die Fluidleitung und der Fluidverbinder weisen jeweils elektrische Heizmittel auf. Allerdings weist der Fluidverbinder keine zusätzlichen Elektro-Steckverbinderteile auf. Zudem umschließt ein Außengehäuse den Fluidverbinder nur bereichsweise.

Der vorliegenden Erfindung liegt die Aufgabe zu Grunde, eine Verbindungsanordnung der eingangs beschriebenen, gattungsgemäßen Art hinsichtlich ihrer Herstellung zu vereinfachen sowie hinsichtlich ihrer Gebrauchseigenschaften weiter zu verbessern.

Erfindungsgemäß wird dies durch eine Verbindungsanordnung mit den Merkmalen des unabhängigen Anspruchs 1 erreicht. Vorteilhafte Ausgestaltungen der Erfindung sind in den abhängigen Ansprüchen und in der anschließenden Beschreibung enthalten.

Erfindungsgemäß weisen demnach die Fluidkupplungsteile zur Fluidbeheizung jeweils mindestens ein elektrisches Heizelement auf, wobei diese Heizelemente über die Elektro-Steckverbinderteile unmittelbar elektrisch verbunden oder verbindbar sind. Dabei sind die Fluidkupplungsteile zudem unter Einschluss der Heizelemente und der Elektro-Steckverbinderteile von einer in einer Kupplungsebene in zwei Gehäuseteile geteilten Kapselung umschlossen.

Indem somit jedes Heizelement der Fluidkupplungsteile direkt an das zugehörige Elektro-Steckverbinderteil angeschlossen ist, wird einerseits die Herstellung durch Vermeidung von zusätzlichen, z. B. über Crimp-Verbindungen anzuschließenden Anschlussleitern vereinfacht. Andererseits wird die von den Heizelementen erzeugte Wärme auch direkt an die Elektro-Steckverbindung weitergegeben, wodurch eine sehr effektive Beheizung erreicht wird. Dies gilt besonders in Verbindung mit der erfindungsgemäßen Kapselung, weil über die Heizelemente und auch über die ebenfalls erwärmten Elektro-Steckverbinderteile der Zwischenraum zwischen den Fluidkupplungsteilen und der Kapselung erwärmt wird, und die Kapselung bewirkt auch eine thermische Isolation, wodurch ein nachteiliger Wärmeverlust nach außen an die Umgebung vermieden oder zumindest minimiert wird. Zudem fungiert die vollständige, bis zur Trennebene geschlossene Kapselung auch als elektrische Isolation der spannungsführenden Bestandteile sowie auch als mechanischer Schutz beispielsweise gegen Steinschlag und dergleichen Beanspruchungen.

Im Folgenden soll die Erfindung anhand der Zeichnung und darin teilweise schematisch veranschaulichter Ausführungs- und Anwendungsbeispiele genauer erläutert werden. Es zeigen:
- Fig. 1: eine stark schematische Längsschnittdarstellung von zwei konfektionierten, beheizbaren Fluidleitungen mit einer erfindungsgemäßen Verbindungsanordnung in einem entkuppelten Zustand vor oder nach dem Verbinden,
- Fig. 2: die gleiche Anordnung wie in Fig. 1, jedoch im gekuppelten Zustand der erfindungsgemäßen Verbindungsanordnung,
- Fig. 3-6: gesonderte Darstellungen von Einzelkomponenten der Gesamtanordnung gemäß Fig. 1,
- Fig. 7: eine Ausschnittvergrößerung aus Fig. 2 im Bereich VII der Verbindungsanordnung,
- Fig. 8: ein konkretes Ausführungsbeispiel der Verbindungsanordnung im entkuppelten Zustand ähnlich Fig. 1,
- Fig. 9: eine gekürzte Seitenansicht einer beheizbaren Fluidleitung in einem Zustand während der Fertigung zur Erläuterung eines vorteilhaften Fertigungsablaufes,
- Fig. 10: eine Verbindungsanordnung in einer Prinzip-Darstellung nach Art eines Blockschaltbildes in einer vorteilhaften Ausführung und Verschaltung von elektrischen Heizelementen und
- Fig. 11: eine schematische Prinzip-Darstellung zu einer bevorzugten Verwendung der erfindungsgemäßen Verbindungsanordnung.

Zu der anschließenden Beschreibung wird ausdrücklich betont, dass die Erfindung nicht auf die Ausführungsbeispiele und dabei nicht auf alle oder mehrere Merkmale von beschriebenen Merkmalskombinationen beschränkt ist, vielmehr kann jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels eine erfinderische Bedeutung haben.

Eine erfindungsgemäße Verbindungsanordnung 1 dient zum schnellen und lösbaren Durchgangsverbinden von zwei elektrisch beheizbaren Fluidleitungen 2 und 4 und besteht dazu aus zwei Kupplungsteilen 6 und 8. Die Kupplungsteile 6, 8 weisen einerseits jeweils eine von zwei korrespondierenden, miteinander fluidisch kuppelbaren und mit jeweils einer der zwei zu verbindenden Fluidleitungen 2, 4 verbundenen Fluidkupplungsteilen 10, 12 sowie andererseits jeweils eines von zwei korrespondierenden, miteinander kuppelbaren Elektro-Steckverbinderteilen 14, 16 derart auf, dass durch Zusammenfügen der beiden Kupplungsteile 6, 8 die Fluidkupplungsteile 10, 12 einerseits und die Elektro-Steckverbinderteile 14, 16 andererseits gemeinsam, also praktisch gleichzeitig verbindbar sind. Ebenso können durch Trennen der beiden Kupplungsteile 6, 8 die Fluidkupplungsteile 10, 12 einerseits und die Elektro-Steckverbinderteile 14, 16 andererseits getrennt werden. Die Verbindungsanordnung 1 erlaubt somit ein schnelles Fügen und Trennen der Fluidverbindung und der, d. h. mindestens einer, elektrischen Verbindung in nur einem gemeinsamen Füge- bzw. Trennvorgang.

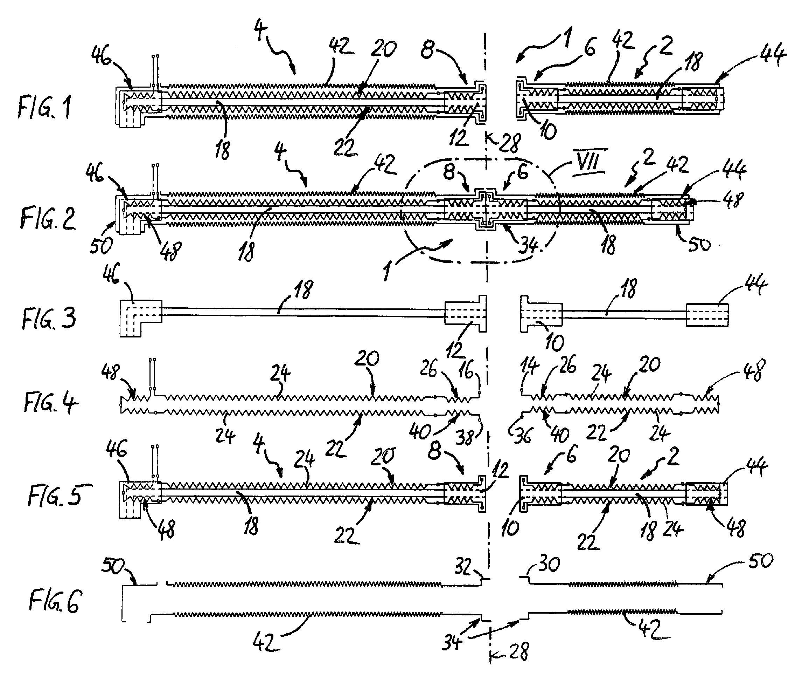

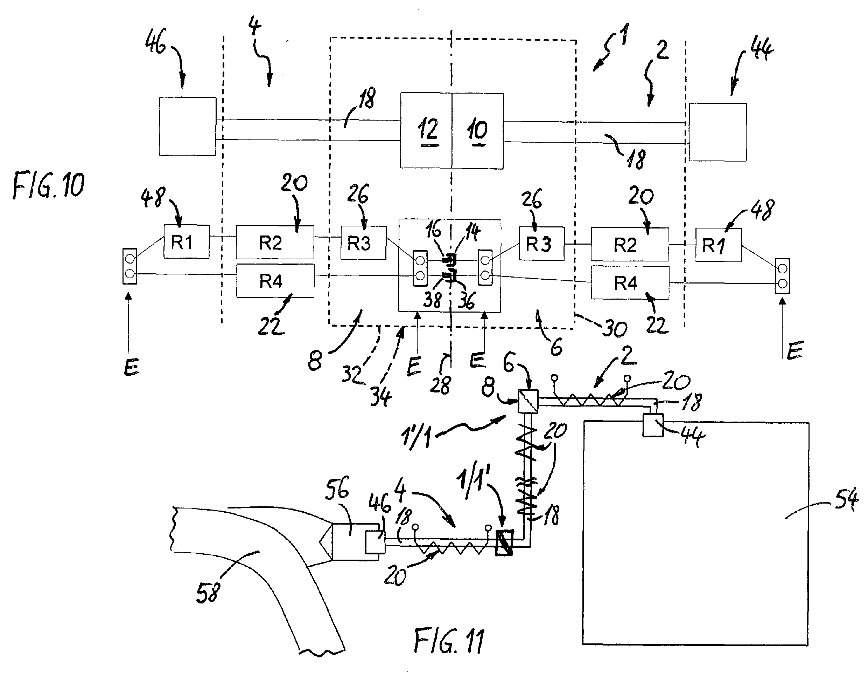

Jede beheizbare Fluidleitung 2, 4 besteht aus einer als Schlauch oder Rohr beispielsweise aus Kunststoff ausgebildeten Medienleitung 18, die zur Beheizung des durch die Leitung 18 geführten Mediums mit mindestens einem elektrischen Heizelement 20 ausgestattet ist. In den dargestellten, bevorzugten Ausführungsbeispielen weist jede Medienleitung 18 zwei Heizelemente 20, 22 auf. Bevorzugt ist das/jedes Heizelement 20, 22 durch einen schraubenlinienförmig um die Medienleitung 18 über deren Länge hinweg gewickelten Heizleiter 24 gebildet, der aus einem geeigneten elektrischen Widerstands-Drahtmaterial besteht, so dass durch einen Stromfluss Wärme erzeugt wird. Bevorzugt ist das/jedes Heizelement 20, 22 jeder Fluidleitung 2, 4 bezüglich des Widerstands-Drahtmaterials und in Anpassung an eine Versorgungsspannung, insbesondere eine Fahrzeug-Bordspannung von 12 oder 24 Volt, so ausgelegt, dass die Leitung mit einer Heizleistung von 15 Watt ± 5 Watt pro Meter Leitungslänge beaufschlagt wird. Dies wird durch Auswahl eines bestimmten Heizdraht-Materials, wie insbesondere CuNi-Heizdraht, und des Draht-Durchmessers sowie der Drahtlänge in Kombination mit der Windungssteigung erreicht. Je nach Drahtmaterial wird eine Gesamt-Drahtlänge von 2000 bis 3000 mm pro Meter Leitungslänge benötigt. Dazu kann eine schraubenlinienförmige Wicklung vorgesehen sein oder mindestens zwei Wicklungen, die bevorzugt in Reihe geschaltet sind. In den Figuren 1 bis 7 ist der/jeder Heizleiter 24 der Heizelemente 20, 22 nur stark vereinfacht als Zickzacklinie dargestellt, und in Fig. 10 sind die Heizelemente 20, 22 symbolhaft als Ersatz-Widerstände R2, R4 veranschaulicht. Der/jeder Heizleiter 24 kann auch - zumindest abschnittsweise - geradlinig in Längsrichtung der Medienleitung 18 verlaufen.

Erfindungsgemäß weisen auch die Fluidkupplungsteile 10, 12 zur Fluidbeheizung jeweils mindestens ein elektrisches Heizelement 26 auf, wobei diese mindestens zwei Heizelemente 26 der beiden Fluidkupplungsteile 10, 12 über die Elektro-Steckverbinderteile 14, 16 unmittelbar elektrisch verbunden oder verbindbar sind. Weiterhin sind dabei die Fluidkupplungsteile 10, 12 erfindungsgemäß unter Einschluss der Heizelemente 26 und der Elektro-Steckverbinderteile 14, 16 von einer in einer Kupplungsebene 28 in zwei Gehäuseteile 30, 32 geteilten Kapselung 34 umschlossen. Jedem Kupplungsteil 6, 8 bzw. dessen Fluidkupplungsteil 10, 12 ist eines der beiden Gehäuseteile 30, 32 der Kapselung 34 zugeordnet.

In Fig. 10 sind die Heizelemente 26 der Fluidkupplungsteile 10, 12 symbolhaft als Ersatzwiderstände R3 dargestellt, und die Kapselung 34 mit den Gehäuseteilen 30, 32 ist vereinfacht durch eine gestrichelte Linie angedeutet.

In bevorzugter Ausgestaltung weist jedes Kupplungsteil 6, 8 mindestens ein weiteres, zweites Elektro-Steckverbinderteil 36, 38 auf, wobei über diese zweiten Elektro-Steckverbinderteile 36, 38 unmittelbar entweder gemäß Fig. 10 die zwei Heizelemente 22 (R4) der beiden Fluidleitungen 2, 4 oder gemäß Fig. 1 bis 8 zwei zusätzliche Heizelemente 40 der Fluidkupplungsteile 10, 12 miteinander verbunden oder verbindbar sind. Auch die zusätzlichen Heizelemente 40 sind - analog zu den bereits erwähnten Heizelementen 20, 22 und 26 -jeweils von einem elektrischen Heizleiter 24 gebildet. Jedes Heizelement 20, 22, 26, 40 umschließt das zugehörige Fluidkupplungsteil 10, 12 bzw. die zugehörige Fluidleitung 2, 4 bzw. Medienleitung 18 zumindest teilweise. Wie schon erwähnt wurde, hat bevorzugt jeder Heizleiter 24 einen gewendelten, insbesondere schraubenlinienförmigen Verlauf. Der/jeder Heizleiter 24 kann aber auch zumindest bereichsweise geradlinig verlaufen. Durch die erfindungsgemäße direkte Anschlussverbindung der Heizleiter 24 an dem jeweils zugehörigen Steckverbinderteil 14, 16; 36, 38 werden auch letztere vorteilhafterweise mit beheizt, wodurch auch eine vorteilhafte Erwärmung des Innenraums innerhalb der Kapselung 34 erreicht wird. Bevorzugt ist das bzw. jedes Heizelement 26, 40 des jeweiligen Fluidkupplungsteils 10, 12 bezüglich des Heizleiters 24 in Anpassung an eine zur Verfügung stehende Versorgungsspannung, insbesondere Fahrzeug-Bordnetz-Spannung von 12 oder 24 Volt, so konzipiert, dass eine Gesamt-Heizleistung von 1,5 Watt ± 0,5 Watt pro Fluidkupplungsteil 10, 12 erreicht wird. Mit einem bestimmten Drahtmaterial - wobei hier analog die zuvor im Zusammenhang mit den Heizelementen 20, 22 der Fluidleitungen 2, 4 beschriebenen Einzelheiten gelten - wird dazu eine Drahtlänge von insgesamt 300 mm ± 100 mm benötigt.

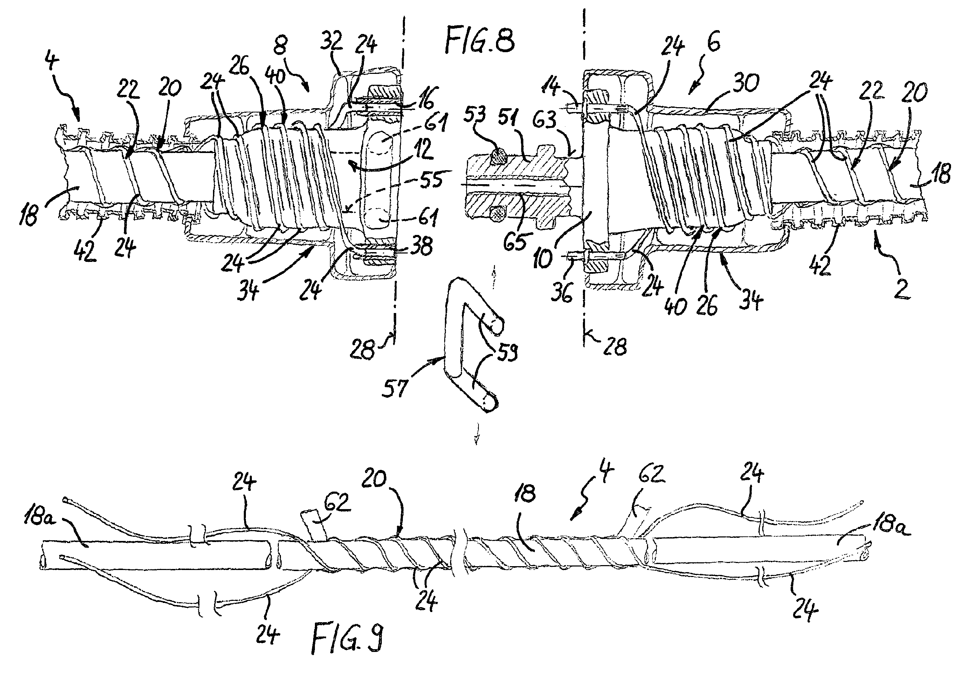

In weiterer vorteilhafter Ausgestaltung sind die mit den Fluidkupplungsteilen 10, 12 verbundenen Fluidleitungen 2, 4 gemeinsam mit den zugehörigen Heizelementen 20, 22 von jeweils einer Leitungsumhüllung 42 umschlossen. Vorteilhafterweise geht hierbei jede Leitungsumhüllung 42 einendig in eines der Gehäuseteile 30, 32 der erfindungsgemäßen Kapselung 34 der Kupplungsteile 6, 8 über. Bevorzugt ist jede Leitungsumhüllung 42 mit ihrem Ende formschlüssig in dem zugehörigen Gehäuseteil 30, 32 aufgenommen. Vorzugsweise kann hierzu jede Leitungsumhüllung 42 aus einem Wellrohr bestehen, wobei die Kapselung 34 im Bereich einer Aufnahmeöffnung formschlüssig in die Umfangskontur des Wellrohrs eingreift. Hierzu wird insbesondere auf Fig. 8 verwiesen.

Wie sich weiterhin aus Fig. 1 bis 6 sowie aus Fig. 10 und 11 ergibt, ist jede Fluidleitung 2, 4 bevorzugt an ihrem anderen, dem zugehörigen Kupplungsteil 6, 8 der erfindungsgemäßen Verbindungsanordnung 1 gegenüberliegenden Ende mit einem elektrisch beheizbaren Leitungsverbinder 44, 46 verbunden. Diese Leitungsverbinder 44, 46 sind bevorzugt als Steckverbinderteile, beispielsweise als Aufnahmemuffen für Stecker oder als Stecker zum Einstecken in korrespondierende Stecköffnungen, ausgebildet. Jeder Leitungsverbinder 44, 46 weist auch mindestens ein elektrisches Heizelement 48 - insbesondere in Form einer Umwicklung mit einem Heizleiter 24 analog zu den übrigen Heizelementen - sowie eine den jeweiligen Verbinder mit dem Heizelement 48 umschließende Umkapselung 50 auf (siehe insbesondere Fig. 2), wobei die jeweilige Leitungsumhüllung 42 auch in diesem Endbereich in die jeweilige Umkapselung 50 übergeht und darin insbesondere formschlüssig gehalten ist. Auf diese Weise wird die gesamte Leitungs- und Verbindungsanordnung von einer in Fig. 6 gesondert veranschaulichten Kapselungsanordnung umhüllt. Dazu sei besonders auf die Darstellung in Fig. 2 verwiesen.

An dieser Stelle sollen noch einige Ausgestaltungsmerkmale kurz erläutert werden, die in den schematischen Zeichnungen teilweise nicht erkennbar sind.

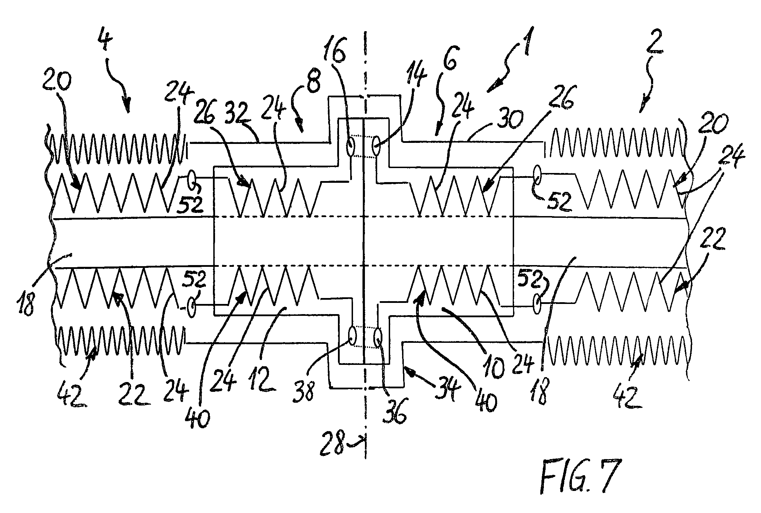

Die Kupplungsteile 6, 8 können beliebige geeignete Haltemittel, beispielsweise lösbare Rastmittel, zur gegenseitigen Fixierung in der verbundenen Kupplungslage gemäß Fig. 2 und 7 aufweisen. Solche Haltemittel, insbesondere Rastmittel, können an den Fluidkupplungsteilen 10,12 und/oder an den Gehäuseteilen 30, 32 der Kapselung 34 vorhanden sein. Beispielsweise kann die gesamte Verbindungsanordnung 1 nur durch Rastmittel an der Kapselung 34 zusammengehalten werden.

In Fig. 8 ist rein exemplarisch - lediglich als eine von vielen möglichen Ausführungen - dargestellt, dass das eine Fluidkupplungsteil, z. B. 10, einen Steckeransatz 51 aufweist, der über eine Dichtung 53 umfangsgemäß abgedichtet in eine Muffenöffnung 55 des anderen Fluidkupplungsteils, z. B. 12, einsteckbar ist. Zur Fixierung gegen Lösen dieser Steckverbindung kann eine U-förmige Halteklammer 57 mit zwei Halteschenkeln 59 durch Queröffnungen 61 im Bereich der Muffenöffnung 55 lösbar eingeschoben werden, wobei die Halteschenkel 59 der Halteklammer 57 durch eine z. B. als Ringnut 63 ausgebildete Haltekontur des Steckeransatzes 51 verlaufen. Zusätzlich ist in Fig. 8 beispielhaft dargestellt, dass innerhalb des Fluidkanals des Fluidkupplungsteils 10 eine Wärmeleithülse 65 angeordnet ist, um Wärme aus dem von den Heizelementen 26, 40 umgebenen Bereich in den Bereich des Steckeransatzes 51 zu führen.

Abweichend von Fig. 8, wonach wegen der Halteklammer 57 Öffnungen in der Kapselung 34 vorgesehen sind, sind die Haltemittel bevorzugt so ausgebildet, dass durch die Kapselung 34 eine vollständige Umhüllung, d. h. eine "Vollkapselung" gewährleistet ist. Dabei sollte über die Heizelemente 26, 40 eine Beheizung der Fluidkupplungsteile 10, 12 bis möglichst nah an die Kupplungsebene 28 gewährleistet sein.

Die Elektro-Steckverbinderteile 14, 16 und optional 36, 38 sind über Haltemittel an den Fluidkupplungsteilen 10, 12 oder alternativ innerhalb der Kapselung 34 gehaltert. Gemäß Fig. 8 können die Elektro-Steckverbinderteile 14, 16; 36, 38 in das Kunststoffmaterial der Fluidkupplungsteile 10, 12 eingeformt oder in Aufnahmeöffnungen fixiert eingesetzt sein. Die Elektro-Steckverbinderteile 14, 16; 36, 38 sind als paarweise zusammensteckbare Buchsen und Stecker ausgebildet, wobei abweichend von Fig. 8, wonach das eine Kupplungsteil 6 zwei Stecker 14, 36 und das andere Kupplungsteil 8 zwei korrespondierende Buchsen 16, 38 aufweist, auch eine symmetrische "Überkreuz-Anordnung" vorgesehen sein kann, wobei jedes Kupplungsteil 6, 8 eine Buchse und einen Stecker aufweist.

Weiterhin sind die Fluidkupplungsteile 10, 12 und die zugehörigen Gehäuseteile 30, 32 der Kapselung 34 relativ zueinander über nicht gesondert dargestellte Haltemittel fixiert.

Zudem kann optional die Kapselung 34 zumindest teilweise mit einer wärmeisolierenden Masse gefüllt, z. B. vergossen sein. Zwischen der Kapselung 34 und dem jeweiligen Kupplungsteil 6, 8 kann auch ein wärmeisolierender Luftraum gebildet sein.

Die Gehäuseteile 30, 32 der Kapselung 34 können im Bereich der Trennebene 28 dichtend und dazu stumpf anliegend verbindbar oder überlappend ineinandersteckbar und insbesondere über Haltemittel gegenseitig fixierbar sein.

Weiterhin kann jedes Gehäuseteil 30, 32 der Kapselung 34 aus zwei insbesondere gleichen Hälften bestehen, also insbesondere aus so genannten "Gleichteilen". Es liegen aber auch ungleiche Teile im Bereich der Erfindung.

Wie sich beispielhaft aus Fig. 7 ergibt, kann das/jedes Heizelement 26, 40 jedes Fluidkupplungsteils 10,12 über ein - bevorzugt von einem Crimp-Verbinder gebildetes - Kontaktelement 52 mit dem zugehörigen Heizelement 20, 22 der Fluidleitung 2, 4 verbunden sein. Alternativ dazu ist in Fig. 8 angedeutet, dass das/jedes Heizelement 20, 22 jeder Fluidleitung 2, 4 auch ohne Teilung einstückig in das Heizelement 26 bzw. 40 des jeweiligen Fluidkupplungsteils 10, 12 übergehen kann. Dazu wird der Heizleiter 24 mit entsprechender Länge durchlaufend von der jeweiligen Medienleitung 18 über das jeweilige Fluidkupplungsteil 10, 12 geführt.

In diesem Zusammenhang ist in Fig. 9 beispielhaft eine Ausführung für die Fluidleitung 2 bzw. 4 dargestellt, die zunächst kontinuierlich, praktisch als "Endlos-Leitung" mit den Heizleitern 24 bewickelt ist. Die Heizleiter 24 sind dann mit einer Umhüllung insbesondere in Form mindestens einer schraubenlinienförmigen Umwicklung mit einem selbstklebenden Band 62 abgedeckt. Zum Konfektionieren, also zum Verbinden mit dem jeweiligen Fluidkupplungsteil 10/12 und dem anderendigen Leitungsverbinder 44/46 wird die so vorgefertigte Fluidleitung mit einer bestimmten Überlänge abgelängt, wobei die Überlänge so bemessen ist, dass von Endabschnitten 18a der Medienleitung die Heizleiter 24 mit einer solchen Länge abgewickelt werden können, dass diese abgewickelten Enden dann auf das jeweilige Fluidkupplungsteil 10/12 bzw. den jeweiligen Leitungsverbinder 44/46 aufgewickelt werden können. Die überschüssigen, von den Heizleitern 24 "befreiten" Enden 18a der Medienleitung werden als "Verschnitt" abgetrennt, bevor die Leitung mit dem Kupplungsteil bzw. Leitungsverbinder verbunden wird. Durch diese vorteilhafte Verfahrensweise haben die Heizleiter 24 einen durchgehenden Verlauf ohne Unterbrechungen und zusätzliche Verbinderteile, wie Crimpverbinder.

Wie in Fig. 10 beispielhaft dargestellt ist, können alle vorhandenen Heizelemente 20, 22, 26, 48 und gegebenenfalls 40 (Fig. 1 bis 8) elektrisch in Reihe geschaltet sein. Die Reihenschaltung kann an einer eigentlich beliebigen Stelle mit einer Versorgungsspannung - insbesondere aus einer nicht dargestellten Fahrzeug-Batterie eines elektrischen Fahrzeug-Bordnetzes - versorgt werden. Mögliche Einspeisungsstellen sind in Fig. 10 mit "E" eingezeichnet. Je nach Verschaltung der Heizelemente kann sich aber auch eine kombinierte Reihen-Parallelschaltung oder auch eine Parallelschaltung ergeben. Es sei ausdrücklich bemerkt, dass alle denkbaren Schaltungs- und Einspeisungsvarianten im Bereich der Erfindung liegen. So könnte grundsätzlich auch ein durchgehender Heizleiter 24 ohne Trenn- und Verbindungsstellen alle vorhandenen Heizelemente bilden, indem er durchlaufend um alle zu beheizenden Komponenten gewickelt wird. Die einzigen Trenn- und Verbindungsstellen wären dann die Elektro-Steckverbinderteile 14, 16; 36, 38 der erfindungsgemäßen Kupplungsteile 6, 8 der Verbindungsanordnung 1.

In Fig. 11 ist eine bevorzugte Verwendung der erfindungsgemäßen Verbindungsanordnung 1 veranschaulicht. Es handelt sich um ein SCR-Katalysatorsystem eines Fahrzeug-Verbrennungsmotors, wobei ein Fluid-Tank 54 mit einer Einspritzeinrichtung 56 zu verbinden ist, die das Fluid, bei dieser Anwendung eine wässrige Harnstofflösung, zur selektiven, katalytischen Reduktion von Stickoxiden in einen Abgasstrang 58 des nicht dargestellten Verbrennungsmotors einspritzt. Hierbei erlaubt die erfindungsgemäße Verbindungsanordnung 1 eine Teilung der Leitungsverbindung zwischen dem Tank 54 und der Einspritzeinrichtung 56. Dies erleichtert die Teile-Montage innerhalb des Fahrzeugs. In aller Regel wird der Tank 54 zuerst montiert. Dazu ist es vorteilhaft, den Tank vor oder bei Montage mit der ersten Fluidleitung 2 zu verbinden, bevorzugt über den Leitungsverbinder 44. Bei der weiteren Fahrzeugmontage ist dann häufig der Tank-Anschluss nicht mehr zugänglich. Dennoch kann die Einspritzeinrichtung 56 über die schon zuvor montierte erste Fluidleitung 2 angeschlossen werden, was auf einfache und schnelle Weise über die zweite Fluidleitung 4 erfolgt, indem lediglich die Kupplungsteile 6, 8 der erfindungsgemäßen Verbindungsanordnung 1 zusammengesteckt zu werden brauchen. Bei dieser bevorzugten Anwendung weisen die beiden Fluidleitungen 2, 4 unterschiedliche Längen auf. Die Länge der kürzeren ersten Fluidleitung 2 beträgt maximal 50 % der Länge der längeren zweiten Fluidleitung 4.

Für bestimmte Anforderungen kann es vorteilhaft sein, dass die über die erfindungsgemäße Verbindungsanordnung 1 verbundenen oder zu verbindenden Fluidleitungen 2 und 4 hinsichtlich ihrer Material- und Gebrauchseigenschaften und/oder ihrer konstruktiven Gestaltung verschiedene Ausführungen von Medienleitungen 18 aufweisen. Die gesamte, von den Fluidleitungen 2, 4 gebildete Leitungsverbindung besteht demnach aus unterschiedlichen Längenabschnitten. Dieser Ausgestaltung liegen folgende Gedanken zu Grunde.

In den genannten SCR-Systemen werden an die beheizbaren Fluidleitungen hohe, sich aus den Beanspruchungsbedingungen ergebende Anforderungen gestellt. Diese Anforderungen betreffen insbesondere das mögliche Auftreten hoher Temperaturen, die an bestimmten Stellen des Systems bzw. der Leitungen z. B. im Bereich von 140°C bis 180°C, kurzzeitig sogar im Bereich bis zu 200°C, liegen können, des Weiteren das Auftreten hoher absoluter Drücke, die standardmäßig im Bereich von 5 bar bis 10 bar, teilweise auch im Bereich bis zu 15 bar, liegen, das Auftreten von Druckpulsationen, die kompensiert werden müssen, sowie auch das Auftreten von Volumenänderungen, die beispielsweise mit dem Gefrieren bei Frost und dem Wiederauftauen des Fluids verbunden sind. Hier spricht man im Hinblick auf die Beanspruchungsgröße von einer so genannten Eisdruckfestigkeit der Leitung.

In diesem Zusammenhang soll eine beheizbare Fluidverbindung geschaffen werden, die bei wenig aufwändiger Herstellungsweise und Montage- bzw. Konnektierungsfähigkeit der Fluidleitung - verglichen mit bekannten Leitungen - erhöhte Anforderungen hinsichtlich der Beständigkeit gegenüber hohen Temperaturen, der Kompensation von Druckpulsationen und/oder der Eisdruckfestigkeit erfüllt.

Dazu sind nun bevorzugt die Medienleitungen 18 der Fluidleitung 2, 4 hinsichtlich ihrer Materialeigenschaften und/oder ihrer konstruktiven Gestalt unterschiedlich ausgebildet, und zwar einerseits als erster Längenabschnitt aus einem ersten Material, welches ein erstes Polymer enthält, und andererseits als zweiter Längenabschnitt aus einem zweiten Material, welches ein zweites Polymer enthält. Dabei ist das zweite Material des zweiten Längenabschnitts flexibler und/oder es weist eine höhere Beanspruchbarkeit auf als das erste Material des ersten Längenabschnitts. Hierbei ist der Fall eingeschlossen, dass die Längenabschnitte bzw. deren Medienleitungen 18 jeweils vollständig aus den genannten Polymeren bestehen.

Dieser bevorzugten Ausgestaltung liegt die Erkenntnis zugrunde, dass durch eine - wie vorstehend beschrieben - in "Hybridbauweise" ausgeführte beheizbare Leitung die Problematik der konträren, an die Fluidleitung gestellten Anforderungen einer überraschend einfachen technischen Lösung zugeführt werden kann. Dabei erfolgt eine differenzierte Strukturierung der gesamten Leitung, d. h. die verschiedenen Längenabschnitte der Leitung werden entsprechend den lokal unterschiedlich vorliegenden Anforderungen gestaltet, wobei der eine Längenabschnitt die erforderliche Hochtemperaturfestigkeit und/oder Kompensation von Druckpulsationen sowie von Volumenänderungen durch die Einwirkung von Eisdruck für die gesamte Leitung gewährleistet. Auch kann in den verschiedenen Längenabschnitten die chemische Beständigkeit, insbesondere die hydrolytische Beständigkeit der Fluidleitung unter Temperatureinfluss, in besonderer Weise Berücksichtigung finden, indem sie lokal unterschiedlich ausgebildet wird. Das Material des zweiten Längenabschnitts kann also eine im Hinblick auf Temperatur, chemische Beständigkeit und/oder Druck höhere Beanspruchbarkeit aufweisen als das Material des ersten Längenabschnitts.

Es sei in diesem Zusammenhang bemerkt, dass die gesamte Fluidverbindung mit Vorteil auch jeweils zwei oder mehr Längenabschnitte umfassen kann, die aus dem ersten polymerhaltigen Material bestehen, und/oder zwei oder mehr Längenabschnitte, die aus dem zweiten, z. B. gummielastischen und damit dehnfähigen, polymerhaltigen Material bestehen.

Der zweite Längenabschnitt bzw. mehrere Abschnitte dieser Art kann bzw. können für besondere Beanspruchungen, wie höhere Temperaturen, wie sie vor allem in der Nähe einer Einspritzeinrichtung eines SCR-Katalysatorsystems eines Fahrzeug-Verbrennungsmotors und des Abgasstrangs des Motors auftreten, sowie auch zur Anpassung an eine Fluid-Volumenausdehnung beim Gefrieren und an den daraus resultierenden Gefrierdruck ausgelegt sein. Diese Tieftemperaturbeanspruchung tritt in einem SCR-Katalysatorsystem am Ausgang aus einem Fluid-Tank auf, der bei der genannten Anwendung als Vorratsbehälter für das katalytisch wirkende Fluid dient und insbesondere eine wässrige Harnstofflösung enthält.

Das Material des ersten Längenabschnitts kann insbesondere ein Polymer enthalten, das ein technischer Kunststoff ist, während das Material des zweiten Längenabschnitts insbesondere ein Polymer enthalten kann, das ein Hochleistungskunststoff ist.

Wenn dabei vorstehend und im Weiteren die Ausdrücke "technischer Kunststoff" und "Hochleistungskunststoff" verwendet werden, so beziehen sich diese Ausdrücke auf eine in der Fachwelt übliche Einteilung der Kunststoffe hinsichtlich ihrer Dauergebrauchstemperatur. Danach wird zwischen Massen- oder Standardkunststoffen mit einer Dauergebrauchstemperatur bis zu 90°C, technischen Kunststoffen mit einer Dauergebrauchstemperatur bis zu 140°C und Hochleistungskunststoffen mit einer Dauergebrauchstemperatur über 140°C unterschieden.

Die Dauergebrauchstemperatur kann auf verschiedene Weise ermittelt werden. In der Methode nach UL 746 B wird ein so genannter Temperatur-Index angeführt, d. h., es wird diejenige Temperatur bestimmt, bei der der Polymerwerkstoff nach 60 000 bzw. 100 000 Stunden noch die Hälfte seiner Zugfestigkeit, seiner Schlagzugfestigkeit oder seiner elektrischen Durchschlagfestigkeit aufweist. Eine analoge Methode ist die IEC 216 (International Electrical Committee), die der DIN VDE 0304 entspricht. Nach dieser Methode wird diejenige Temperatur bestimmt, bei der nach 20 000 Stunden die Werte der mechanischen und elektrischen Eigenschaften nur noch die Hälfte betragen.

Als Massenkunststoffe werden aufgrund dieser Kriterien insbesondere Polyethylen (PE), Polypropylen (PP), Polyvinylchlorid (PVC) und Polystyrol (PS) klassifiziert. Zu den technischen Kunststoffen zählen Polymethacrylsäuremethylester (PMMA), Polyamid (PA), Polyethylenterephtalat (PET), Polycarbonat (PC), Acrylnitril-Butadien-Styrol (ABS) und Polyoxymethylen (POM). Zu den Hochleistungskunststoffen zählen Polytetrafluorethylen (PTFE), Polyvinylidenfluorid (PVDF), Polybutylenterephtalat (PBT), Polysulfone (PSU), Polyaryletherketone (PAEK), Polyphenylensulfide (PPS) und Polyimide (PI) sowie verschiedene Copolymere, die die kleinsten repetierenden Ketten-Struktureinheiten der vorgenannten Verbindungen gemeinsam enthalten. Da diese hochwertigen Polymere sehr aufwändig herzustellen und folglich teuer sind, beschränkt sich ihr Einsatz auf bestimmte Spezialfälle. Aus diesem Grund werden diese Werkstoffe trotz ihres exzellenten Eigenschaftsbildes auch nicht zur Herstellung von bekannten Fluidleitungen eingesetzt.

Ein erster, einen technischen Kunststoff enthaltender, insbesondere vollständig aus diesem Kunststoff bestehender, Längenabschnitt der Medienleitung ist sehr kostengünstig herstellbar und kann deshalb insbesondere in größerer Länge - bzw. in im Vergleich mit dem zweiten Längenabschnitt größerer Länge - innerhalb eines Kraftfahrzeugs eingesetzt werden.

Als polymerer Werkstoff des ersten Längenabschnitts kann dabei mit Vorteil ein Polyamid (PA), insbesondere PA 6, PA 66, PA 11 oder PA 12, gewählt werden, wodurch eine im Hinblick auf den Gesamt-Werkstoffeinsatz aufwandsarme Fertigung der erfindungsgemäßen Fluidleitung gewährleistet werden kann. Der erste Längenabschnitt kann dabei beispielsweise als Kunststoff-Formrohr ausgebildet sein, wobei im Sinne einer erhöhten Stabilität auch gefüllte technische Kunststoffe, z. B. faserverstärkte Kunststoffe, zum Einsatz kommen können.

Polyamide sind eine überaus große Polymerklasse, deren einzelne Vertreter auf unterschiedliche Weise hergestellt werden. Charakteristisch ist dabei das Vorhandensein von funktionellen Amidgruppen -CO-NH- oder auch -CO-NR- im Makromolekül, wobei R einen organischen Rest beschreibt. Zur Bezeichnung der Polyamide mit Kurzzeichen, die aus den Buchstaben "PA" sowie darauf folgenden Zahlen und Buchstaben bestehen, wird auf die Norm DIN EN ISO 1043-1 verwiesen. Hiernach werden Polyamide, die sich von einer Aminocarbonsäure des Typs H₂N-(CH₂)ₓ-COOH oder den entsprechenden Lactamen ableiten lassen, mit PA Z gekennzeichnet, wobei Z die Anzahl der Kohlenstoffatome im Monomer bezeichnet (Z = x + 1). So steht z. B. PA 6 für ein Polymer, das aus ε-Caprolactam bzw. ω -Aminocapronsäure [NH-(CH₂)₅-CO]ₙ. hergestellt wird. PA 11 wird aus 11-Aminoundecansäure und PA 12 aus Laurinlactam oder ω-Aminodecansäure hergestellt.

PA 11 und PA 12 sind kältebeständig bis mindestens -50°C und dauerwärmebeständig bis höchstens +80°C. Durch Zusatz von Stabilisatoren sowie Weichmachern kann jedoch die Kälte- bzw. Wärmebeständigkeit auf Werte von -60°C bzw. +110°C, kurzzeitig bis 160°C erhöht werden. PA 12 ist beispielsweise unter dem Namen VESTAMID^{Ⓡ} L im Handel. Dieser Werkstoff weist nur eine sehr geringe Wasseraufnahme auf, wobei aus ihm hergestellte Formteile bei wechselnder Umgebungsfeuchte nur geringste Dimensionsänderungen zeigen. Selbst weit unter dem Gefrierpunkt hat PA12 eine außerordentlich hohe Schlagzähigkeit und Kerbschlagzähigkeit. Des Weiteren weist es eine gute bis sehr gute chemische Beständigkeit gegen Fette, Öle, Kraftstoffe, Hydraulikflüssigkeiten, viele Lösemittel sowie Salzlösungen und andere Chemikalien auf.

Polyamide, die sich von Diaminen und Dicarbonsäuren der Typen H₂N-(CH₂)ₓ-NH₂ und HOOC-(CH₂)_{y}-COOH ableiten lassen, werden mit PA Z1Z2 gekennzeichnet, wobei Z1 die Anzahl der Kohlenstoffatome im Diamin und Z2 die Anzahl der Kohlenstoffatome in der Dicarbonsäure bezeichnet (Z1 = *x*, Z2 = *y* + 2). So steht z. B. PA 66 für das Polymer aus Hexamethylendiamin und Adipinsäure, [NH-(CH₂)₆-NH-CO-(CH₂)₄-CO]ₙ.

Obwohl der Herstellungsprozess der beiden technisch am häufigsten verwendeten Polyamide PA 6 und PA 66 grundlegend verschieden ist, sind PA 6 und PA 66 chemisch und physikalisch sehr ähnlich und unterscheiden sich lediglich durch eine gespiegelte Anordnung einer -CH₂-NH-CO-Gruppe. PA 6 und PA 66 sind kältebeständig bis mindestens -30°C und dauerwärmebeständig bis höchstens 105°C, bzw. PA 66 bis maximal 120 °C.

Das Polymer des zweiten Längenabschnitts kann mit Vorteil ein Elastomer, beispielsweise hydrierter Acrylnitrilbutadien-Kautschuk (HNBR), Ethylen-Propylen-Dien-Kautschuk (EPDM) für eine Temperaturbeanspruchung bis zu 170°C, ein Ethylen-Propylen-Kautschuk (EPM) für eine Temperaturbeanspruchung über 200°C oder auch ein thermoplastisches Elastomer (TPE) sein.

Aus dieser Werkstoffklasse erscheinen besonders PA 12-Elastomere geeignet. Diese sind Blockcopolymere aus PA 12- und aus Polyether-Segmenten (Polyetherblockamide PEBA). Sie zeigen die wesentlichen Eigenschaften von PA12, wobei sich mit zunehmendem Polyether-Gehalt der Elastomercharakter immer mehr ausprägt. Die Polymere werden elastisch biegsamer und kälteschlagzäher.

Dabei kann der zweite Längenabschnitt als - im Vergleich mit dem ersten Längenabschnitt - flexiblerer, für höhere Beanspruchungen, insbesondere höhere Temperaturen und/oder höheren Innendruck, ausgelegter Schlauch ausgeführt werden, der aus einem gummielastischen, insbesondere mehrschichtigen, z. B. gewebeverstärkten Material besteht. Als Druckträgergewebe für eine solche Verstärkung können bei Temperaturen, die im Bereich von etwa 150°C bis 180°C liegen, mit Vorteil Gewebe aus aromatischen Polyamidfasern (Aramid), beispielsweise bekannt unter dem Markennamen Kevlar®, und für noch höhere Temperaturbereiche Gewebe aus Kohlenstofffasern eingesetzt werden.

Als Hochleistungskunststoffe können vor allem Fluorpolymere, wie Polytetrafluorethylen (PTFE), Ethylen-Tetrafluorethylen (ETFE), Perfluorethylenpropylen (FEP), Polyarylenetherketone (PEAK), wie Polyphenylene, z. B. Poly[di-(oxy-1,4-phenylen)carbonyl-1,4-phenylen] (Polyetheretherketon, PEEK), Poly[oxy-1,4-phenylenoxy-di-(1,4-phenylencarbonyl-1,4-phenylen] (Polyetheretherketonketon, PEEKK) oder Poly[-oxy-1,4-phenylencarbonyl-1,4-phenylenoxy-di-(1,4-phenylencarbonyl)-1,4-phenylen] (Polyetherketonetherketonketon, PEKEKK) zur Anwendung kommen, oder auch Polyarylensulfide, wie Polyphenylensulfid (PPS), zur Anwendung kommen.

Was den Werkstoff PTFE betrifft, so weist dieser höchste thermische Beständigkeiten auf. Ein merklicher Abbau tritt erst bei Temperaturen über 350°C ein. Die obere Dauergebrauchstemperatur liegt bei 250°C. Allerdings unterscheidet sich PTFE auch grundlegend vom Schmelzverhalten anderer Polymere, indem es sich bei Temperaturen im Bereich von 325°C bis 340°C bei Ablauf einer Volumenvergrößerung von etwa 30 Prozent aus einer weißen kristallinen in eine transparente amorphe Substanz verwandelt und selbst bei Temperaturen über 400°C formstabil bleibt. Zur Herstellung von Rohren und Schläuchen müssen daher spezielle Techniken angewendet werden, z. B. die Herstellung von extrusionsfähigen und gegebenenfalls später sinterbaren pastösen Massen, die neben PTFE-Teilchen Füllstoffe und Plastifikatoren, wie unter Compoundbildung andere Polymere, z. B. Polyamide, enthalten können. Weniger aufwändig ist jedoch eine Beschichtung, insbesondere eine Innenbeschichtung der Rohrleitung in ihrem zweiten - gegebenenfalls auch im ersten - Längenabschnitt der Rohrleitung, mit PTFE.

Besonders bevorzugt als mögliche Polymer-Materialien für den zweiten Längenabschnitt sind auch Polyphthalamide (PPA), insbesondere Hochtemperatur-Polyphthalamide (HT-PPA). Dabei handelt es sich um eine Gruppe von Polyamiden, die aus den aromatischen Monomeren Tere- und Isophthalsäure (HOOC-C₆H₄₋COOH) und Hexamethylendiamin (6 C-Atome) hergestellt werden, und die unter den Polyamiden die höchsten Temperaturbeständigkeiten aufweisen. Die Dauerwärmebeständigkeit liegt im Bereich von etwa 150°C bis maximal 160°C. Die Feuchtigkeitsaufnahme liegt im Bereich von nur etwa 0,1 Prozent bis 0,3 Prozent.

Ein Vertreter der oben erwähnten Polyamid-Gruppe, die mit PA Z1 Z2 gekennzeichnet wird, ist beispielsweise auch PA 612, welches beispielsweise unter dem Namen VESTAMID® D im Handel ist. Dieses Polyamid ist das Polykondensationsprodukt aus 1,6-Hexamethylendiamin und 1,12-Dodecandisäure. Wenn auch die Carbonamidgruppen-Konzentration in PA 612 geringfügig höher ist als in Polyamid 12, so ist sie doch deutlich niedriger als bei PA 6 bzw. PA 66. Dadurch haben Teile aus PA 612 fast unverändert die oben genannten vorteilhaften Eigenschaften von PA 12. Jedoch weist PA 612 als zusätzlichen Vorteil im Vergleich mit PA 12 einen fast um 40°C höheren Schmelzpunkt auf und hat so eine bessere Wärmeformbeständigkeit. Die Dauerwärmebeständigkeit liegt im Bereich von etwa 130°C bis 140°C. Auch die Rückstell-Elastizität von PA 612 ist bei hoher Nassfestigkeit höher als bei PA 12. Auch PA 612 kann daher mit Vorteil als Polymer im Material des zweiten Längenabschnitts eingesetzt werden.

In diesem Zusammenhang ist zu erwähnen, dass erfindungsgemäß auch noch Polymere unter dem Begriff "Hochleistungskunststoffe" ("High Performance Polymers") subsumiert werden, die eine Dauerwärmebeständigkeit im Bereich von etwa 130°C bis 140°C aufweisen, wobei - wie bereits aus den vorstehenden Ausführungen hervorgeht - eine hohe Wärmebeständigkeit nicht das einzige Kriterium für eine Eignung eines Materials als Polymer für den zweiten Längenabschnitt der Rohrleitung darstellt. Die erwähnten Hochleistungskunststoffe weisen jedoch in der Mehrzahl nicht nur im Hinblick auf die maximale Temperatur, sondern auch im Hinblick auf die minimale Temperatur, die chemische Beständigkeit und/oder den Druck eine höhere Beanspruchbarkeit auf als technische Kunststoffe.

Bei einer Anwendung der beheizbaren Fluidverbindung in einem SCR-Katalysatorsystem kann es gemäß Fig. 11 insbesondere vorteilhaft sein, die gesamte Fluidverbindung zwischen dem Tank 54 und der Einspritzeinrichtung 56 in mindestens drei Längenabschnitte zu unterteilen, wobei jeweils in der Nähe des Tanks 54 und in der Nähe der Einspritzeinrichtung 56 kürzere Längenabschnitte angeordnet sind, die das zweite polymerhaltige Material enthalten, und wobei der mittlere, längere Längenabschnitt der Leitung das erste polymerhaltige Material enthält. Die jeweiligen Längenabschnitte sind über jeweils eine Verbindungsanordnung verbunden, und zwar lösbar über eine erfindungsgemäße Verbindungsanordnung 1 (beispielhaft in Tank-Nähe) oder unlösbar über eine beliebige andere Verbindung 1' (z. B. in der Nähe der Einspritzeinrichtung 56). Das mittlere, längere Leitungsstück kann aus einem preisgünstigen Material bestehen, während für die äußeren, kürzeren Leitungsstücke hochwertigeres, insbesondere für höhere Temperaturen und/oder höheren Druck geeignetes Material verwendet wird.

In weiterer bevorzugter Ausgestaltung ist vorgesehen, dass die Kupplungsteile 6, 8 der erfindungsgemäßen Verbindungsanordnung 1, und zwar insbesondere deren Fluidkupplungsteile 10, 12 bezüglich des jeweiligen Materials entsprechend der jeweils mit dem Fluidkupplungsteil 10 bzw. 12 verbundenen Fluidleitung 2, 4 ausgebildet sind. Bevorzugt gilt dies auch für die Gehäuseteile 30, 32 der Kapselung 34 und/oder für die Leitungsumhüllungen 42. Dies bedeutet mit anderen Worten, dass in Abhängigkeit von dem ersten oder zweiten Material der jeweiligen Fluidleitung 2 oder 4 auch die weiteren, dieser Fluidleitung 2 oder 4 unmittelbar zugeordneten Komponenten ebenfalls zumindest anteilig aus dem gleichen, ersten oder zweiten Material bestehen.

## Patentansprüche

1. Verbindungsanordnung (1) zum schnellen und lösbaren Durchgangsverbinden von zwei elektrisch beheizbaren Fluidleitungen (2, 4), bestehend aus zwei Kupplungsteilen (6, 8), die jeweils eines von zwei korrespondierenden, miteinander kuppelbaren und mit jeweils einer der zwei zu verbindenden Fluidleitungen (2, 4) verbundenen oder verbindbaren Fluidkupplungsteilen (10, 12) sowie jeweils mindestens ein Elektro-Steckverbinderteil (14, 16; 36, 38) derart aufweisen, dass durch Zusammenfügen der beiden Kupplungsteile (6, 8) die Fluidkupplungsteile (10, 12) einerseits und die Elektro-Steckverbinderteile (14, 16) andererseits gemeinsam verbindbar sind,
**dadurch gekennzeichnet, dass** die Fluidkupplungsteile (10, 12) zur Fluidbeheizung jeweils mindestens ein elektrisches Heizelement (26 / 40) aufweisen, wobei die Heizelemente (26 / 40) der beiden Fluidkupplungsteile (10, 12) über die Elektro-Steckverbinderteile (14, 16; 36, 38) unmittelbar elektrisch verbindbar sind, und wobei die Fluidkupplungsteile (10, 12) unter Einschluss der Heizelemente (26 / 40) und der Elektro-Steckverbinderteile (14, 16; 36, 38) von einer in einer Kupplungsebene (28) in zwei Gehäuseteile (30, 32) geteilten Kapselung (34) umschlossen sind.

2. Verbindungsanordnung nach Anspruch 1,
**dadurch gekennzeichnet, dass** jedes Kupplungsteil (6, 8) mindestens ein weiteres, zweites Elektro-Steckverbinderteil (36, 38) aufweist, wobei über diese zweiten Elektro-Steckverbinderteile (36, 38) unmittelbar zwei Heizelemente (22) der beiden Fluidleitungen (2, 4) oder zwei zusätzliche Heizelemente (40) der Fluidkupplungsteile (10, 12) miteinander verbindbar sind.

3. Verbindungsanordnung nach Anspruch 1 oder 2,
**dadurch gekennzeichnet, dass** das/jedes Heizelement (20, 22, 26, 40) das zugehörige Fluidkupplungsteil (10, 12) bzw. die zugehörige Fluidleitung (2, 4) zumindest teilweise umschließt und dazu insbesondere aus einem schraubenlinienartig herumgewickelten Heizleiter (24) besteht.

4. Verbindungsanordnung nach einem der Ansprüche 1 bis 3,
**dadurch gekennzeichnet, dass** die mit den Fluidkupplungsteilen (10, 12) verbundenen Fluidleitungen (2, 4) gemeinsam mit den zugehörigen Heizelementen (20, 22) von jeweils einer Leitungsumhüllung (42) umschlossen sind, wobei jede Leitungsumhüllung (42) einendig in eines der Gehäuseteile (30, 32) der Kapselung (34) der Kupplungsteile (6, 8) übergeht.

5. Verbindungsanordnung nach einem der Ansprüche 1 bis 4,
**dadurch gekennzeichnet, dass** jede Fluidleitung (2, 4) an ihrem anderen, dem zugehörigen Kupplungsteil (6, 8) gegenüberliegenden Ende mit einem Leitungsverbinder (44, 46) verbunden ist, der zur Fluid-Beheizung mindestens ein elektrisches Heizelement (48) aufweist.

6. Verbindungsanordnung nach einem der Ansprüche 1 bis 5,
**dadurch gekennzeichnet, dass** der/jeder Heizleiter (24) im Übergangsbereich von der Fluidleitung (2/4) zu dem jeweiligen Fluidkupplungsteil (10/12) und/oder zu dem jeweiligen Leitungsverbinder (44/46) durchgehend ohne Unterbrechung und zusätzliche Verbindungsmittel verläuft.

7. Verbindungsanordnung nach einem der Ansprüche 1 bis 6,
**dadurch gekennzeichnet, dass** die Kupplungsteile (6, 8) Haltemittel zur gegenseitigen Fixierung in der verbundenen Kupplungslage aufweisen.

8. Verbindungsanordnung nach einem der Ansprüche 1 bis 7,
**dadurch gekennzeichnet, dass** die Elektro-Steckverbinderteile (14, 16; 36, 38) über Haltemittel an den Fluidkupplungsteilen (10, 12) und/oder innerhalb der Kapselung (34) gehaltert sind.

9. Verbindungsanordnung nach einem der Ansprüche 1 bis 8,
**dadurch gekennzeichnet, dass** die Fluidkupplungsteile (10, 12) und die Gehäuseteile (30, 32) der Kapselung (34) relativ zueinander über Haltemittel fixiert sind.

10. Verbindungsanordnung nach einem der Ansprüche 1 bis 9,
**dadurch gekennzeichnet, dass** ein Zwischenraum zwischen der Kapselung (34) und dem jeweiligen Kupplungsteil (6, 8) zumindest teilweise mit einer isolierenden Masse gefüllt ist und/oder einen wärmeisolierenden Luftspalt bildet.

11. Verbindungsanordnung nach einem der Ansprüche 1 bis 10,
**dadurch gekennzeichnet, dass** die Gehäuseteile (30, 32) der Kapselung (34) im Bereich der Trennebene (28) dichtend und dazu stumpf anliegend verbindbar oder überlappend ineinandersteckbar und insbesondere über Haltemittel gegenseitig fixierbar sind.

12. Verbindungsanordnung nach einem der Ansprüche 1 bis 11,
**dadurch gekennzeichnet, dass** jedes Gehäuseteil (30, 32) der Kapselung (34) aus zwei insbesondere gleichen Hälften besteht.

13. Verbindungsanordnung nach einem der Ansprüche 1 bis 12,
**dadurch gekennzeichnet, dass** das/jedes Heizelement (26, 40) jedes Fluid-Kupplungsteils (10, 12) entweder über ein Kontaktelement (52) mit dem zugehörigen Heizelement (20, 22) der Fluidleitung (2, 4) verbunden ist oder unmittelbar durchgehend in das Heizelement (20, 22) der Fluidleitung (2, 4) übergeht.

14. Verbindungsanordnung nach einem der Ansprüche 1 bis 13,
**dadurch gekennzeichnet, dass** die zwei Fluidleitungen (2, 4) unterschiedliche Längen aufweisen, wobei die Länge der kürzeren Fluidleitung (2) maximal 50 % der Länge der längeren Fluidleitung (4) beträgt.

15. Verbindungsanordnung nach einem der Ansprüche 1 bis 14,
**dadurch gekennzeichnet, dass** die zwei Fluidleitungen (2, 4) hinsichtlich ihrer Materialeigenschaften und/oder ihrer konstruktiven Gestalt unterschiedlich ausgebildet sind, und zwar insbesondere einerseits aus einem ersten Material, welches ein erstes Polymer enthält, und andererseits aus einem zweiten Material, welches ein zweites Polymer enthält, wobei das zweite Material flexibler ist und/oder eine höhere Beanspruchbarkeit aufweist als das erste Material.

16. Verbindungsanordnung nach einem der Ansprüche 1 bis 15,
**dadurch gekennzeichnet, dass** die vorhandenen Heizelemente (20, 22, 26, 40, 48) elektrisch in Reihe geschaltet sind.

17. Verwendung einer Verbindungsanordnung (1) nach einem der vorhergehenden Ansprüche für ein SCR-Katalysatorsystem eines Verbrennungsmotors, wobei über die Kupplungsteile (6, 8) eine erste, insbesondere kürzere, mit einem Fluid-Tank (54) verbundene Fluidleitung (2) mit einer zweiten, insbesondere längeren Fluidleitung (4) verbunden wird.

18. Konfektionierte Medienleitung,
bestehend aus einer elektrisch beheizbaren Fluidleitung (2/4) und der Verbindungsanordnung (1) nach einem der Ansprüche 1 bis 16.

## Claims

1. A connection arrangement (1) for the rapid and detachable through connection of two electrically heatable fluid lines (2, 4), consisting of two coupling parts (6, 8) which have in each case one of two corresponding fluid coupling parts (10, 12) which can be coupled together and are or can be connected to in each case one of the two fluid lines (2, 4) which are to be connected, and in each case at least one electrical plug-in connector part (14, 16; 36, 38), such that by joining the two coupling parts (6, 8) the fluid coupling parts (10, 12) on one hand and the electrical plug-in connector parts (14, 16) on the other hand are jointly able to be connected,
**characterised in that** the fluid coupling parts (10, 12) for heating fluid have in each case at least one electrical heating element (26 / 40), the heating elements (26 / 40) of the two fluid coupling parts (10, 12) being able to be connected electrically and directly via the electrical plug-in connector parts (14, 16; 36, 38), and the fluid coupling parts (10, 12) including the heating elements (26 / 40) and the electrical plug-in connector parts (14, 16; 36, 38) are encompassed by an encapsulation (34) which is divided in a coupling plane (28) into two housing parts (30, 32).

2. A connection arrangement according to Claim 1, **characterised in that** each coupling part (6, 8) has at least one further, second electrical plug-in connector part (36, 38), two heating elements (22) of the two fluid lines (2, 4) or two additional heating elements (40) of the fluid coupling parts (10, 12) being able to be connected together directly via these second electrical plug-in connector parts (36, 38).

3. A connection arrangement according to Claim 1 or 2, **characterised in that** the/each heating element (20, 22, 26, 40) at least partially encompasses the associated fluid coupling part (10, 12) or the associated fluid line (2, 4), and for this purpose consists in particular of a helically wound-around heating conductor (24).

4. A connection arrangement according to one of Claims 1 to 3, **characterised in that** the fluid lines (2, 4) connected with the fluid coupling parts (10, 12) together with the associated heating elements (20, 22) are in each case encompassed by a line sheath (42), each line sheath (42) merging at one end into one of the housing parts (30, 32) of the encapsulation (34) of the coupling parts (6, 8).

5. A connection arrangement according to one of Claims 1 to 4, **characterised in that** each fluid line (2, 4) is connected at its other end opposing the associated coupling part (6, 8) to a line connector (44, 46) which has at least one electrical heating element (48) for heating the fluid.

6. A connection arrangement according to one of Claims 1 to 5, **characterised in that** the/each heating conductor (24) extends continuously without interruption and additional connecting means in the region of transition from the fluid line (2/4) to the respective fluid coupling part (10/12) and/or to the respective line connector (44/46).

7. A connection arrangement according to one of Claims 1 to 6, **characterised in that** the coupling parts (6, 8) have holding means for reciprocal fixing in the connected coupling position.

8. A connection arrangement according to one of Claims 1 to 7, **characterised in that** the electrical plug-in connector parts (14, 16; 36, 38) are held on the fluid coupling parts (10, 12) and/or within the encapsulation (34) via holding means.

9. A connection arrangement according to one of Claims 1 to 8, **characterised in that** the fluid coupling parts (10, 12) and the housing parts (30, 32) of the encapsulation (34) are fixed relative to one another via holding means.

10. A connection arrangement according to one of Claims 1 to 9, **characterised in that** a gap between the encapsulation (34) and the respective coupling part (6, 8) is filled at least partially with an insulating compound and/or forms a heat-insulating air gap.

11. A connection arrangement according to one of Claims 1 to 10, **characterised in that** the housing parts (30, 32) of the encapsulation (34) in the region of the parting plane (28) are able to be connected in sealing manner and being in a butt joint for this purpose, or can be inserted overlapping into one another and can be reciprocally fixed in particular via holding means.

12. A connection arrangement according to one of Claims 1 to 11, **characterised in that** each casing part (30, 32) of the encapsulation (34) consists of two in particular identical halves.

13. A connection arrangement according to one of Claims 1 to 12, **characterised in that** the/each heating element (26, 40) of each fluid coupling part (10, 12) is either connected to the associated heating element (20, 22) of the fluid line (2, 4) via a contact element (52) or merges directly continuously into the heating element (20, 22) of the fluid line (2, 4).

14. A connection arrangement according to one of Claims 1 to 13, **characterised in that** the two fluid lines (2, 4) are of different lengths, the length of the shorter fluid line (2) being at most 50% of the length of the longer fluid line (4).

15. A connection arrangement according to one of Claims 1 to 14, **characterised in that** the two fluid lines (2, 4) are formed differently with respect to their material properties and/or their structural form, namely in particular on one hand of a first material which contains a first polymer, and on the other hand of a second material which contains a second polymer, the second material being more flexible and/or having a higher stressability than the first material.

16. A connection arrangement according to one of Claims 1 to 15, **characterised in that** the heating elements (20, 22, 26, 40, 48) present are electrically connected in series.

17. Use of a connection arrangement (1) according to one of the preceding claims for an SCR catalyst system of a combustion engine, wherein via the coupling parts (6, 8) a first, in particular shorter, fluid line (2) which is connected to a fluid tank (54) is connected to a second, in particular longer, fluid line (4).

18. A preassembled media line, consisting of an electrically heatable fluid line (2/4) and the connection arrangement (1) according to one of Claims 1 to 16.

## Revendications

1. Dispositif d'assemblage (1) pour l'assemblage rapide et amovible, avec passage direct, de deux conduites de fluide (2, 4) à chauffage électrique, constitué de demi-accouplements (6, 8), qui comprennent chacun un des deux demi-raccords pour fluide (10, 12), correspondants, pouvant être accouplés l'un à l'autre, et raccordés ou pouvant être raccordés chacun à l'une des deux conduites de fluide (2, 4) à raccorder, et aussi chacun au moins une moitié de connecteur électrique enfichable (14, 16 ; 36, 38), de telle sorte que, par réunion des deux demi-accouplements (6, 8), on puisse assembler ensemble d'une part les deux demi-accouplements (6, 8) des demi-raccords pour fluide (10, 12), et d'autre part les moitiés de connecteurs électriques enfichables (14, 16), **caractérisé en ce que** les demi-raccords pour fluide (10, 12) comprennent chacun, pour le chauffage du fluide, au moins un élément chauffant électrique (26/40), les éléments chauffants (26/40) des deux demi-raccords pour fluides (10, 12) pouvant être électriquement connectés directement par l'intermédiaire des moitiés de connecteurs électriques enfichables (14, 16 ; 36, 38), et les demi-raccords pour fluide (10, 12) étant, avec inclusion des éléments chauffants (26/40) et des moitiés de connecteurs électriques enfichables (14, 16 ; 36, 38), entourés d'un blindage (34) partagé en deux parties de boîtier (30, 32) dans un plan d'accouplement (28).

2. Dispositif d'assemblage selon la revendication 1, **caractérisé en ce que** chaque demi-accouplement (6, 8) comprend au moins une deuxième moitié supplémentaire de connecteurs électriques enfichables (36, 38), deux éléments chauffants (22) des deux conduites pour fluide (2, 4), ou deux éléments chauffants supplémentaires (40) des demi-raccords pour fluide (10, 12), pouvant être directement assemblés l'un à l'autre par l'intermédiaire de ces deuxièmes moitiés de connecteurs électriques enfichables (36, 38).

3. Dispositif d'assemblage selon la revendication 1 ou 2, **caractérisé en ce que** le/chaque élément chauffant (20, 22, 26, 40) entoure au moins partiellement le demi-raccord pour fluide (10, 12) correspondant ou la conduite de fluide (2, 4) correspondante, en étant à cette fin constitué en particulier d'un conducteur chauffant (24) enroulé en hélice.

4. Dispositif d'assemblage selon l'une des revendications 1 à 3, **caractérisé en ce que** les conduites de fluide (2, 4) assemblées à l'aide des demi-raccords pour fluide (10, 12) sont ensemble avec les éléments chauffants correspondants (20, 22) entourés chacun d'une enveloppe de conduite (42), chaque enveloppe de conduite (42) se poursuivant, à une extrémité, par l'une des parties de boîtier (30, 32) du blindage (34) des demi-accouplements (6, 8).

5. Dispositif d'assemblage selon l'une des revendications 1 à 4, **caractérisé en ce que** chaque conduite de fluide (2, 4) est, en son autre extrémité, opposée au demi-accouplement correspondant (6, 8), assemblée à un connecteur (44, 46), qui pour le chauffage du fluide comprend au moins un élément chauffant électrique (48).

6. Dispositif d'assemblage selon l'une des revendications 1 à 5, **caractérisé en ce que** le/chaque conducteur chauffant (24) court, dans la zone de transition allant de la conduite de fluide (2/4) au demi-raccord pour fluide correspondant (10/12) et/ou au connecteur correspondant (44/46), d'une manière continue sans interruption et sans organes d'assemblage supplémentaires.

7. Dispositif d'assemblage selon l'une des revendications 1 à 6, **caractérisé en ce que** les demi-accouplements (6, 8) comprennent des moyens d'arrêt pour fixation réciproque dans la position d'accouplement assemblée.

8. Dispositif d'assemblage selon l'une des revendications 1 à 7, **caractérisé en ce que** les moitiés de connecteurs électriques enfichables (14, 16 ; 36, 38) sont maintenues à l'aide de moyens d'arrêt contre les demi-raccords pour fluide (10, 12) et/ou à l'intérieur du blindage (34).

9. Dispositif d'assemblage selon l'une des revendications 1 à 8, **caractérisé en ce que** les demi-raccords pour fluide (10, 12) et les parties de boîtier (30, 32) du blindage (34) sont fixés l'un par rapport à l'autre à l'aide de moyens d'arrêt.

10. Dispositif d'assemblage selon l'une des revendications 1 à 9, **caractérisé en ce qu'**un espace intermédiaire entre le blindage (34) et le demi-accouplement correspondant (6, 8) est au moins partiellement rempli d'une masse isolante et/ou forme une fente d'air isolante thermique.

11. Dispositif d'assemblage selon l'une des revendications 1 à 10, **caractérisé en ce que** les parties de boîtier (30, 32) du blindage (34) peuvent, dans la zone du plan de séparation (28), être assemblées avec étanchéité et, à cette fin, avec aboutement, ou peuvent être enfichées l'une dans l'autre avec chevauchement et en particulier peuvent être fixées l'une par rapport à l'autre par l'intermédiaire de moyens d'arrêt.

12. Dispositif d'assemblage selon l'une des revendications 1 à 11, **caractérisé en ce que** chaque partie de boîtier (30, 32) du blindage (34) est constituée de deux moitiés, en particulier égales.

13. Dispositif d'assemblage selon l'une des revendications 1 à 12, **caractérisé en ce que** le/chaque élément chauffant (26, 40) de chaque demi-raccord pour fluide (10, 12), ou bien est assemblé par l'intermédiaire d'un élément de contact (52) à l'élément chauffant correspondant (20, 22) de la conduite de fluide (2, 4), ou bien se poursuit directement et en continu par l'élément chauffant (20, 22) de la conduite de fluide (2, 4).

14. Dispositif d'assemblage selon l'une des revendications 1 à 13, **caractérisé en ce que** les deux conduites de fluide (2, 4) ont des longueurs différentes, la longueur de la conduite de fluide la plus courte (2) étant d'au moins 50 % de la longueur de la conduite de fluide la plus longue (4).

15. Dispositif d'assemblage selon l'une des revendications 1 à 14, **caractérisé en ce que** les deux conduites de fluide (2, 4) sont configurées différemment pour ce qui est des propriétés de leur matériau et/ou de leur construction, et plus précisément en particulier d'une part en un premier matériau qui contient un premier polymère, et d'autre en un deuxième matériau qui contient un deuxième polymère, le deuxième matériau étant plus souple que le premier matériau et présentant une aptitude plus grande que le premier matériau à résister aux sollicitations.

16. Dispositif d'assemblage selon l'une des revendications 1 à 15, **caractérisé en ce que** les éléments chauffants présents (20, 22, 26, 40, 48) sont montés électriquement en série.

17. Utilisation d'un dispositif d'assemblage (1) selon l'une des revendications précédentes pour un système catalyseur SCR d'un moteur à combustion interne, une première conduite de fluide (2), en particulier plus courte, assemblée à un réservoir de fluide (54), étant par l'intermédiaire des demi-accouplements (6, 8) assemblée à une deuxième conduite de fluide (4), en particulier plus longue.

18. Conduite de fluide préparée, consistant en une conduite de fluide pouvant être électriquement chauffée (2/4) et du dispositif d'assemblage (1) selon l'une des revendications 1 à 16.
